# EUROPÄISCHE PATENTSCHRIFT

(11) **EP 1 889 333 B1**
(45) Veröffentlichungstag und Bekanntmachung des Hinweises auf die Patenterteilung: **14.07.2010**
(21) Anmeldenummer: 06763361.0
(22) Anmeldetag: 30.05.2006
(51) Int. Cl.: H01R 13/447, H02G 3/18

(54) **STECKSCHARNIER**
INSERTION-TYPE HINGE
CHARNIERE ENFICHABLE

(30) Priorität: 09.06.2005 DE 102005026715
(43) Veröffentlichungstag der Anmeldung: 20.02.2008
(73) Patentinhaber: SIEMENS AKTIENGESELLSCHAFT, 80333 München (DE)
(72) Erfinder: SCHMID, Adolf, 93164 Laaber (DE)
(86) Internationale Anmeldenummer: PCT/EP2006/062708
(87) Internationale Veröffentlichungsnummer: WO 2006/131458

(56) Entgegenhaltungen:
- DE-A1- 19 625 187
- DE-C1- 3 932 128
- DE-U1-202004 004 505

## Beschreibung

Die Erfindung betrifft ein Steckscharnier gemäß dem Oberbegriff des Patentanspruchs 1, das einerseits mit einem Drehlagerteil und anderseits mit einem Stecklagerteil versehen ist und mehrere Wandungen aufweist, die eine Aussparung in dem Stecklagerteil umgeben, welche zur Aufnahme eines Rastmittels vorgesehen ist; ein derartiges Steckscharnier ist aus der DE 196 25 187 A1 bekannt.

Verwendung findet ein solches Steckscharnier beispielsweise in einem Reiheneinbaugerät, insbesondere in einer Reiheneinbausteckdose gemäß der DE 20 2004 004 505 U1, bei dem ein Schwenkdeckel zur Abdeckung bestimmter Geräteteile über das Steckscharnier mit dem Gerät verbunden ist.

Das aus der DE 196 25 187 A1 bekannte Steckscharnier ist jedoch mit einer feststehenden und gehäuseseitig angeordneten Rastnase an dem Gehäuse arretiert, wodurch eine starre Fixierung des Steckscharniers gegeben ist. Der an dem Steckscharnier angeordnete Schwenkdeckel kann in Folge dessen bei einer unsachgemäßen Bedienung, beispielsweise bei einer Schwenkbewegung über den zulässigen Schwenkbereich hinaus, beschädigt werden. Gegebenenfalls kann dabei auch das Steckscharnier in Mitleidenschaft gezogen werden.

Der Erfindung liegt die Aufgabe zugrunde, ein Steckscharnier zu schaffen, mit dem bei mechanischer Überbeanspruchung Beschädigungen am Steckscharnier selbst und/oder an Anbauteilen vermieden werden können.

Die Lösung der Aufgabe ist ausgehend von einem Steckscharnier gemäß dem Oberbegriff des Patentanspruchs 1 erfindungsgemäß durch die kennzeichnenden Merkmale des Patentanspruchs 1 gegeben; vorteilhafte Ausgestaltungen sind jeweils Gegenstand von weiteren Ansprüchen.

Durch das im Sinne eines Ausgleichselements ausgeführte Rastmittel, das zur Kompensation einer auf das Drehlagerteil und/oder Stecklagerteil einwirkenden Betätigungskraft dient, wird ein Steckscharnier bereitgestellt, mit dem bei mechanischer Überbeanspruchung Beschädigungen am Schwenkdeckel bzw. am Steckscharnier selbst vermeidbar sind.

Gemäß einer vorteilhaften Ausgestaltung ist das Rastmittel zumindest an einer der Wandungen des Stecklagerteils angeordnet und federnd ausgeführt, wodurch eine platzsparende Anordnung gegeben ist, mit der eine Deformierung des Steckscharniers bzw. des Schwenkdeckels bei erhöhter mechanischer Belastung vermieden werden kann.

Mit Vorteil weist das Steckscharnier eine Zapfen-Bauform auf, welche bauartbedingt ein einfaches Einführen des Steckscharniers in eine dafür vorgesehene Einführöffnung an einem Gerätegehäuse ermöglicht.

In einer weiteren vorteilhaften Ausgestaltung weist das Drehlagerteil eine C-Form auf, wodurch eine radiale Öffnung zum montagefreundlichen Einrasten bzw. zum aufwandsreduzierten Ausrasten eines Lagerbolzen des Schwenkdeckels gegeben ist. Aufwändige Verbindungselemente, wie Schrauben oder dergleichen, können somit entfallen.

Vorteilhafterweise ist das C-förmige Drehlagerteil in Bezug zu der Längsachse des Zapfens gekröpft, so dass bei einer übermäßig starken mechanischen Belastung des Drehlagers in öffnungsrichtung der darin geführte Lagerbolzen ausrasten kann, um Bauteilschäden zu vermeiden.

Mit Vorteil weist das Steckscharnier ein S-förmiges Federelement als Rastmittel auf, dessen festes Ende an der Bodenwandung des Stecklagerteils angeordnet ist und dessen freies Ende über die Projektionsfläche des Zapfens herausragt. Hierdurch ist ein einfaches, jedoch wirkungsvolles Rastmittel gegeben, welches in eingebautem Zustand bei auftretenden Zugkräften eine Ausgleichsbewegung zulässt und dennoch selbsttätig in seine Ausgangslage zurückkehrt.

Vorteilhafterweise ist das Federelement als an dem Steckscharnier angespritztes Kunststoffteil ausgeführt, wodurch eine einfache Herstellung gewährleistet ist.

Mit Vorteil weist der Schwenkdeckel zwei Lagerbolzen auf, die am Schwenkdeckelrahmen in Bezug auf die Lage der zugehörigen Deckellängskante in etwa parallel und in Bezug auf die Höhe des Schwenkdeckelrahmens in etwa mittig angeordnet sind, so dass sich ein Schwenkbereich von 180° ergibt.

Vorteilhafterweise ist ein Einbaugerät mit dem über zwei Steckscharniere gekoppelten Schwenkdeckel ausrüstbar, wobei sich durch die in das Gehäuse des Einbaugeräts integrierbaren Steckscharniere eine insgesamt kompakte Bauform erzielen lässt, die keinen weiteren Einbauraum benötigt. Das Einbaugerät erlaubt darüber hinaus eine effiziente Montage.

Die Erfindung sowie vorteilhafte Ausgestaltungen gemäß den Merkmalen der weiteren Ansprüche werden im Folgenden anhand in der Zeichnung dargestellter Ausführungsbeispiele näher erläutert, ohne dass insoweit eine Beschränkung der Erfindung erfolgt; darin zeigen:
- FIG 1: ein erfindungsgemäßes Steckscharnier in einer per- spektivischen Darstellung;
- FIG 2: eine Reiheneinbausteckdose mit eingesetzten Steck- scharnieren gemäß FIG 1 in einer perspektivischen Darstellung;
- FIG 3: eine Schnittdarstellung der Reiheneinbausteckdose ge- mäß FIG 2;
- FIG 4: einen Schwenkdeckel in einer perspektivischen Dar- stellung;
- FIG 5: die Reiheneinbausteckdose mit einem angebauten Schwenkdeckel nach FIG 4; und
- FIG 6: die Reiheneinbausteckdose gemäß FIG 5 mit verschiede- nen Schwenkdeckelstellungen.

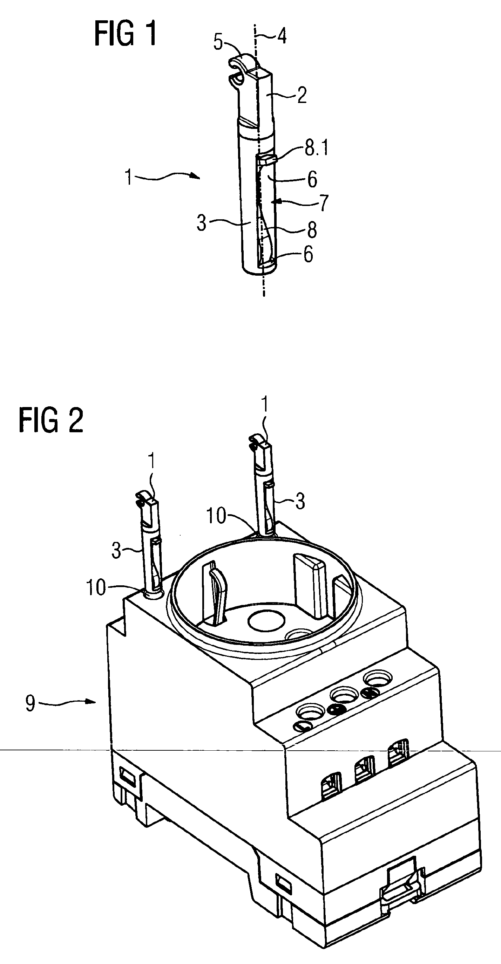

In FIG 1 ist ein Steckscharnier 1 in einer räumlichen Darstellung gezeigt, das ein Drehlagerteil 2 und ein Stecklagerteil 3 aufweist. Das Steckscharnier 1 ist im Wesentlichen zapfenförmig mit einem runden Querschnitt ausgeführt und weist eine Längsachse 4 auf. Das Drehlagerteil 2 befindet sich an einem Ende des Steckscharniers 1, das von dem runden Querschnitt des Zapfens abgesetzt ist und stattdessen einen Vierkant-Querschnitt aufweist. Daran anschließend weist der Vierkant eine zu der Längsachse 4 abgekröpfte C-förmige Lagerklammer 5 auf.

An dem dem einen Ende gegenüberliegenden anderen Ende des Steckscharniers 1 ist das Stecklagerteil 3 angeordnet. Das Stecklagerteil 3 ist mit Wandungen 6 versehen, die eine Aussparung 7 einfassen. An der dem anderen Ende naheliegendsten Wandung 6 ist innerhalb der Aussparung 7 ein Rastmittel 8 angebracht. Das Rastmittel 8 ist dünnwandig ausgeführt und weist eine S-Form auf, wodurch eine federnde Wirkung gegeben ist. Die Wandungsstärke beträgt beispielsweise 0,5 mm bis 3 mm. Ein Freiende 8.1 des Rastmittels 8 ragt aus der Aussparung 7 heraus. Das Rastmittel 8 ist demzufolge als rückstellfestes Widerlager im Sinne eines Ausgleichselements zur Kompensation einer auf das Drehlagerteil 2 und/oder Stecklagerteil 3 einwirkenden Betätigungskraft ausgeführt.

Das Steckscharnier 1 besteht ebenso wie das Rastmittel 8 vorzugsweise aus Kunststoff; in dieser Materialausführung kann das Rastmittel 8 auf einfache Weise durch das so genannte Spritzgussverfahren hergestellt werden. Andere Materialien, wie beispielsweise Metalle, können ebenfalls vorgesehen werden, da insbesondere das Rastmittel 8 in Form eines Metallstreifens elastische bzw. federnde Eigenschaften aufweist.

In FIG 2 ist eine Reiheneinbausteckdose 9 gezeigt, die mit zwei Steckscharnieren 1 versehen ist. Die beiden Steckscharniere 1 sind jeweils an ihrem Stecklagerteil 3 in einer dafür vorgesehenen Öffnung 10 in dem Gehäuse der Reiheneinbausteckdose 9 ansatzweise eingeführt.

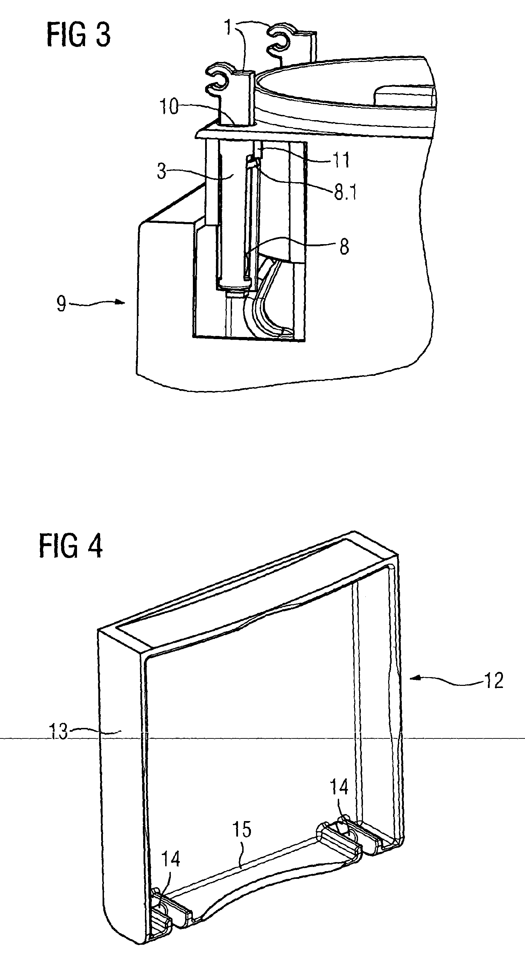

Gemäß FIG 3 befinden sich die Steckscharniere 1 bereits in ihrer Montageendstellung in dem Gehäuse der Reiheneinbausteckdose 9. Das Gehäuse der Reiheneinbausteckdose 9 ist zur Veranschaulichung im Bereich des vorderen Steckscharniers aufgeschnitten dargestellt. Dabei ist ersichtlich, wie das aus der Aussparung 8 des Stecklagerteils 3 herausragende Freiende 8.1 des Rastmittels 8 nach vollständiger Einführung des Stecklagerteils 3 in der Gehäuseöffnung 10 an einem Gehäusevorsprung 11 verrastet. Bei einer Krafteinwirkung auf das Steckscharnier 1 entgegen der Einführrichtung würde demzufolge das als S-förmiges Federelement ausgeführte Rastmittel 8 nachgeben und einen Aufwärtshub des Steckscharniers 1 unter Federdruck zulassen.

In FIG 4 ist ein Schwenkdeckel 12 gezeigt, der mit einem Rahmen 13 und daran angeordneten Lagerbolzen 14 versehen ist. Die Lagerbolzen 14 sind hierbei am Schwenkdeckelrahmen 13 in Bezug auf die Lage der zugehörigen Deckellängskante 15 in etwa parallel und in Bezug auf die Höhe des Schwenkdeckelrahmens 13 in etwa mittig angeordnet ist.

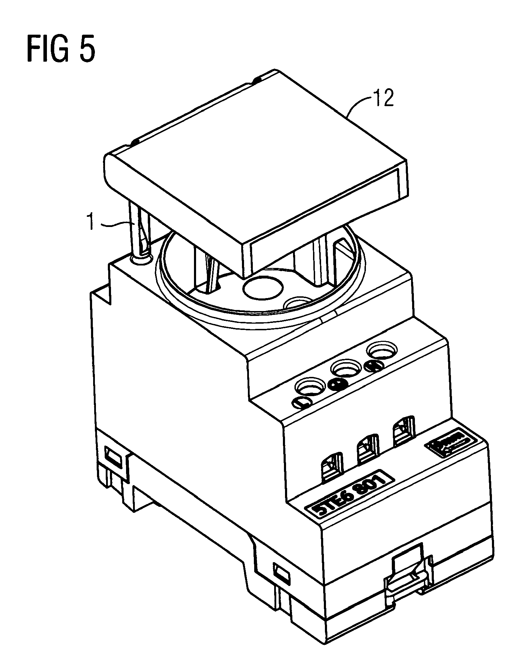

Gemäß FIG 5 ist der Schwenkdeckel 12 in seiner Montagestellung gezeigt, wobei seine beiden Lagerbolzen an den beiden Steckscharnieren 1 eingerastet und somit gelagert sind. Bedingt durch die C-förmigen Lagerklammern 5 gemäß FIG 1 kann auch eine Nachrüstung von Einbaugeräten mit Schwenkdeckeln auf einfache Weise erfolgen.

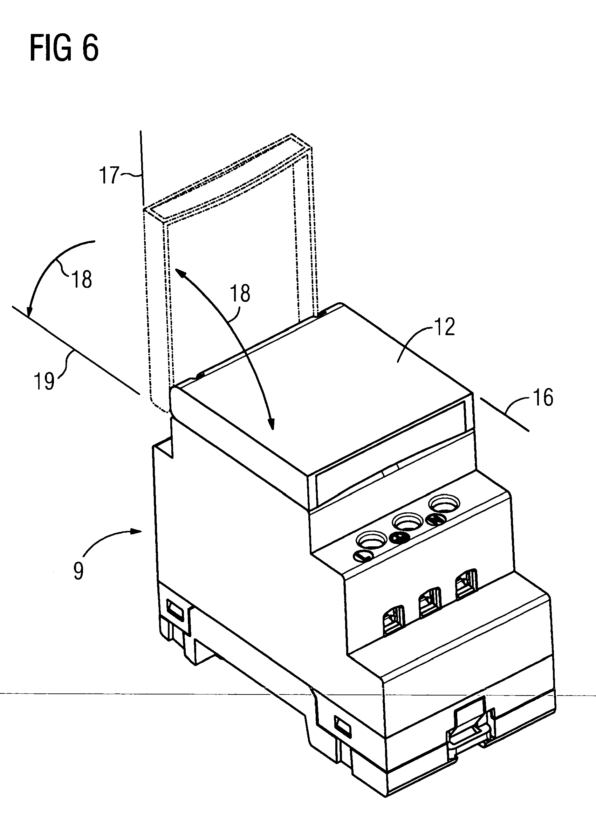

In FIG 6 ist die Reiheneinbausteckdose 9 mit vollständig über zwei Steckscharniere montiertem Schwenkdeckel 12 gezeigt, wobei sich der Schwenkdeckel 12 in seiner Schließstellung 16 befindet. Beispielhaft ist der Schwenkdeckel 12 in einer Zwischenstellung 17 auch strichliert dargestellt, wobei die beiden Bewegungspfeile 18 den Schwenkbereich des Schwenkdeckels 12 wiedergeben. Die Öffnungsstellung 19 ist bereits bei einem um 90° in Bezug auf die Schließstellung 16 bewegten Schwenkdeckel 12 erreichbar. Ein Verschwenkwinkel von 180° ist gleichfalls zur Erreichung der Öffnungsstellung 19 möglich. Sofern eine Zugkraft auf den geschlossenen Schwenkdeckel 12 einwirkt, federn die beiden Steckscharniere die Kraftwirkung ab. Wird hingegen eine Druckkraft auf den geöffneten Schwenkdeckel 12 ausgeübt, so kann dieser an seinen Lagerzapfen aus den Lagerklammern ausrasten. In beiden Extremfällen kann somit eine Beschädigung oder Deformierung der Steckscharniere bzw. des Schwenkdeckels sicher vermieden werden. Sofern der Einsatz eines deckellosen Einbaugerätes gewünscht sein sollte, kann dieser zusammen mit den Steckscharnieren demontiert werden, und zwar ohne dass störende Gehäuse- oder Lagerkonturen stehen bleiben. Dabei besteht beispielsweise die Möglichkeit, über eine Entriegelungsöffnung mit einem Entriegelungsmittel das Freiende 8.1 bzw. das Rastmittel 8 so zurückzustellen, dass das Steckscharnier 1 abgezogen werden kann.

Zusammenfassend bezieht sich die vorliegende Erfindung auf ein Steckscharnier 1, das vor mechanischer Überbeanspruchung geschützt ist bzw. mittels dem Beschädigungen an daran angeordneten Anbauteilen 12 vermeidbar sind; hierbei weist das Steckscharnier 1 einerseits ein Drehlagerteil 2 und anderseits ein Stecklagerteil 3 auf und ist mit mehreren Wandungen 6 versehen, die eine Aussparung 7 in dem Stecklagerteil 3 zur Aufnahme eines Rastmittels 8 umgeben, wobei das Rastmittel 8 im Sinne eines Ausgleichselements zur Kompensation einer auf das Drehlagerteil 2 und/oder auf das Stecklagerteil 3 einwirkenden Kraft ausgeführt ist.

## Patentansprüche

1. Steckscharnier (1), das einerseits mit einem Drehlagerteil (2) und anderseits mit einem Stecklagerteil (3) versehen ist und mehrere Wandungen (6) aufweist, die eine Aussparung (7) in dem Stecklagerteil (3) zur Aufnahme eines Rastmittels (8) umgeben, **dadurch gekennzeichnet, dass** das Rastmittel (8) im Sinne eines Ausgleichselements zur Kompensation einer auf das Drehlagerteil (2) und/oder Stecklagerteil (3) einwirkenden Betätigungskraft ausgeführt ist.

2. Steckscharnier nach Anspruch 1, bei dem das Rastmittel (8) zumindest an einer der Wandungen (6) angeordnet und federnd ausgeführt ist.

3. Steckscharnier nach Anspruch 1 oder 2, mit einer Zapfen-Bauform.

4. Steckscharnier nach Anspruch 1,2 oder 3, bei dem das Drehlagerteil C-förmig ausgebildet ist.

5. Steckscharnier nach einem der Ansprüche 1 bis 4, bei dem das C-förmige Drehlagerteil (5) versetzt, insbesondere im rechten Winkel, zu der Längsachse (4) des Zapfens angeordnet ist.

6. Steckscharnier nach einem der vorhergehenden Ansprüche, mit einem S-förmigen Federelement als Rastmittel (8), dessen festes Ende an der Bodenwandung (6) angeordnet ist und dessen freies Ende über die Projektionsfläche des Zapfens herausragt.

7. Steckscharnier nach Anspruch 6, bei dem das Federelement als angespritztes Kunststoffteil ausgeführt ist.

8. Schwenkdeckel mit zumindest einem Steckscharnier nach einem der Ansprüche 1 bis 7.

9. Schwenkdeckel (12) nach Anspruch 8, dessen Lagerbolzen (14) am Schwenkdeckelrahmen (13) in Bezug auf die Lage der zugehörigen Deckellängskante (15) in etwa parallel und in Bezug auf die Höhe des Schwenkdeckelrahmens (13) in etwa mittig angeordnet ist.

10. Einbaugerät (9) mit einem Schwenkdeckel (12) nach einem der Ansprüche 8 oder 9.

11. Einbaugerät (9) nach Anspruch 10, das als Reiheneinbausteckdose ausgeführt ist.

## Claims

1. Insertion-type hinge (1) which is provided with a pivot bearing part (2) on one side and an insertion-type bearing part (3) on the other and has a plurality of walls (6) which enclose a recess (7) in the insertion-type bearing part (3) for the purpose of receiving a detent means (8), **characterised in that** the detent means (8) is embodied in the form of a compensation element for compensating an actuating force acting on the pivot bearing part (2) and/or on the insertion-type bearing part (3).

2. Insertion-type hinge according to claim 1, wherein the detent means (8) is arranged on at least one of the walls (6) and is embodied as resilient.

3. Insertion-type hinge according to claim 1 or 2, having the structural shape of a journal.

4. Insertion-type hinge according to claim 1, 2 or 3, wherein the pivot bearing part is embodied in a C shape.

5. Insertion-type hinge according to one of claims 1 to 4, wherein the C-shaped pivot bearing part (5) is arranged offset, in particular at right angles, to the longitudinal axis (4) of the journal.

6. Insertion-type hinge according to one of the preceding claims, having an S-shaped spring element as detent means (8), the fixed end of which is arranged on the base wall (6) and the free end of which protrudes beyond the projection surface of the journal.

7. Insertion-type hinge according to claim 6, wherein the spring element is embodied as an extruded plastic part.

8. Swivelling cover having at least one insertion-type hinge according to one of claims 1 to 7.

9. Swivelling cover (12) according to claim 8, the bearing pin (14) of which is arranged on the swivelling cover frame (13) approximately parallel in relation to the position of the associated longitudinal edge (15) of the cover and approximately centred in relation to the height of the swivelling cover frame (13).

10. Installation device (9) having a swivelling cover (12) according to one of claims 8 or 9.

11. Installation device (9) according to claim 10, which is embodied as a socket outlet for series installation.

## Revendications

1. Charnière enfichable (1), qui est dotée d'une part d'une partie de logement tournant (2) et d'autre part d'une partie de logement enfichable (3) et présente plusieurs parois (6), qui entourent un évidement (7) dans la partie de logement enfichable (3) pour contenir un moyen d'encliquetage (8), **caractérisée en ce que** le moyen d'encliquetage (8) est réalisé dans le sens d'un élément de compensation pour la compensation d'une force d'actionnement agissant sur la partie de logement tournant (2) et/ou de la partie de logement enfichable (3).

2. Charnière enfichable selon la revendication 1, dans laquelle le moyen d'encliquetage (8) est disposé au moins sur l'une des parois (6) et réalisé de façon à faire ressort.

3. Charnière enfichable selon la revendication 1 ou 2, présentant une forme de tenon.

4. Charnière enfichable selon la revendication 1, 2 ou 3, dans laquelle la partie de logement tournant (5) est réalisée en forme de C.

5. Charnière enfichable selon l'une quelconque des revendications 1 à 4, dans laquelle la partie de logement tournant (5) en forme de C est disposée de façon décalée, en particulier à angle droit, par rapport à l'axe longitudinal (4) du tenon.

6. Charnière enfichable selon l'une quelconque des revendications précédentes, comprenant un élément de ressort en forme de S comme moyen d'encliquetage (8), dont l'extrémité fixe est disposée sur la paroi de fond (6) et dont l'extrémité libre dépasse de la surface de projection du tenon.

7. Charnière enfichable selon la revendication 6, sur laquelle l'élément de ressort est réalisé sous forme de partie plastique surinjectée.

8. Couvercle pivotant présentant au moins une charnière enfichable selon l'une quelconque des revendications 1 à 7.

9. Couvercle pivotant (12) selon la revendication 8, dont le boulon de logement (14) est disposé sur le cadre de couvercle pivotant (13) à peu près parallèlement par rapport à la position du bord longitudinal du couvercle (15) correspondant et à peu près au centre par rapport à la hauteur du cadre de couvercle pivotant (13).

10. Appareil à encastrer (9) présentant un couvercle pivotant (12) selon l'une quelconque des revendications 8 ou 9.

11. Appareil à encastrer (9) selon la revendication 10, qui est réalisé sous forme d'une prise à encastrer en rangée.
